**Europäisches Patentamt**

**European Patent Office**

**Office européen des brevets**

(19)

(11) Numéro de publication : **0 286 510 B1**

(12)

# FASCICULE DE BREVET EUROPEEN

(45) Date de publication du fascicule du brevet :
**22.04.92 Bulletin 92/17**

(51) Int. Cl.⁵ : **H02J 7/14, B60L 1/02**

(21) Numéro de dépôt : **88400758.4**

(22) Date de dépôt : **29.03.88**

---

(54) **Dispositif d'alimentation électrique en surtension.**

---

(30) Priorité : **31.03.87 FR 8704504**

(43) Date de publication de la demande :
**12.10.88 Bulletin 88/41**

(45) Mention de la délivrance du brevet :
**22.04.92 Bulletin 92/17**

(84) Etats contractants désignés :
**DE IT SE**

(56) Documents cités :
**DE-A- 1 811 965**
**US-A- 3 469 073**
**US-A- 3 668 514**
**PROCEEDINGS IEE, vol. 124, no. 3, mars 1977, pages 231-236, US; D.F. ANDREW: "Electric train heating with diesel locomotives"**

(73) Titulaire : **VALEO EQUIPEMENTS ELECTRIQUES MOTEUR**
**2, Rue André Boulle**
**F-94000 Creteil (FR)**

(72) Inventeur : **Vogelsberger, Marcel**
**5, Place Leamington**
**F-92330 Sceaux (FR)**
Inventeur : **Meuret, Jean-Pierre**
**13, rue Paul Verlaine**
**F-93130 Noisy-Le Sec (FR)**
Inventeur : **Ducrot, Christian**
**4, Clos Saint-Denis**
**F-94000 Creteil (FR)**

(74) Mandataire : **Schrimpf, Robert et al**
**Cabinet Regimbeau 26, Avenue Kléber**
**F-75116 Paris (FR)**

EP 0 286 510 B1

# Description

L'invention est relative à un dispositif d'alimentation électrique en surtension, en régime temporaire, des circuits auxiliaires d'un véhicule automobile.

Les circuits électriques d'un véhicule automobile sont habituellement alimentés par une batterie d'accumulateurs chargée par un alternateur dont le courant d'excitation est régulé par un régulateur.

Il est le plus souvent avantageux de subdiviser en fait les circuits électriques du véhicule en un circuit principal 1 et des circuits auxiliaires 2, le circuit principal comprenant les circuits d'allumage, de charge de batterie, de chauffage, de ventilation et d'éclairage alimentés sous tension nominale, et les circuits auxiliaires comportant un réseau de chauffage électrique rapide destiné au pare-brise, à la lunette arrière, aux sièges et à des dispositifs infrarouge alimentés sous tension plus élevée, en fonction de la rapidité recherchée.

L'alimentation en surtension des circuits auxiliaires précités présente un caractère temporaire qui dépend soit d'une temporisation tributaire de la température extérieure, soit de la température du circuit de refroidissement du véhicule, soit de l'action même du conducteur.

On connaît du brevet US-A-3 469 073, un dispositif qui déconnecte l'alternateur du circuit principal lors de l'alimentation en surtension des circuits auxiliaires.

D'autres solutions proposées pour assurer cette alimentation consistent, à partir de la tension nominale délivrée par l'alternateur, à utiliser un transformateur élévateur de tension pour alimenter les circuits auxiliaires.

D'autres solutions consistant à prévoir une alimentation à partir d'un deuxième bobinage alternateur avec un nombre de spires approprié, pour provoquer l'obtention d'une surtension, ont été proposées.

Les solutions précitées présentent respectivement les inconvénients de l'utilisation d'un équipement supplémentaire, un transformateur, lequel, en fait, ne fonctionne que très peu de temps lors du démarrage du véhicule, celui-ci et le moteur étant encore à température ambiante, et de la réduction de la puissance nominale de l'alternateur en fonctionnement normal du fait de la présence du bobinage auxiliaire.

La présente invention a pour but de remédier aux inconvénients précités par la mise en oeuvre d'un dispositif d'alimentation électrique en surtension des circuits auxiliaires d'un véhicule automobile dans lequel l'utilisation d'un équipement supplémentaire, tel un transformateur,est supprimée.

Un autre objet de la présente invention est la mise en oeuvre d'un dispositif d'alimentation en énergie électrique d'un véhicule automobile dans lequel l'alternateur, bien que fonctionnant en régime de surtension, fonctionne toujours à une puissance voisine et au moins égale à sa puissance nominale.

Un autre objet de la présente invention est également la mise en oeuvre d'un dispositif d'alimentation en énergie électrique d'un véhicule automobile dans lequel, pendant que l'alternateur fonctionne en surtension, l'alimentation concomitante des circuits auxiliaires à tension surélevée et du circuit principal à tension nominale est réalisée.

Un autre objet de la présente invention est en outre un dispositif d'alimentation en énergie électrique d'un véhicule automobile dans lequel les pertes par effet Joule de l'alternateur sont réduites lorsque l'alternateur fonctionne en régime de surexcitation.

Suivant l'invention, le dispositif d'alimentation électrique en surtension des circuits auxiliaires d'un véhicule automobile dont le circuit principal comprend une charge d'utilisation principale alimentée par une batterie d'accumulateurs chargée par un alternateur dont le courant d'excitation est régulé par un régulateur comprend un alternateur comportant deux enroulements identiques, chaque enroulement stator constituant une première , respectivement deuxième sortie alternateur, un premier et un deuxième circuits à redresseurs commandés connectés à la première respectivement deuxième sortie alternateur, les sorties des circuits à redresseurs commandés étant connectés en parallèle pour former une première sortie alternateur redressée connectée au circuit principal, le deuxième circuit redresseur comportant en outre des éléments redresseurs dont la sortie forme une deuxième sortie alternateur redressée connectée par l'intermédiaire d'un commutateur de commande aux circuits auxiliaires, un régulateur d'excitation alternateur permettant l'excitation dudit alternateur sous une intensité correspondant à un nombre d'ampère-tours permettant de délivrer sur chaque sortie alternateur une tension d'alimentation en régime de surexcitation, ledit circuit régulateur comportant une entrée de régulation connectée à la première respectivement deuxième sortie alternateur redressée par l'intermédiaire d'un circuit de commande d'excitation, un circuit d'initialisation du circuit de commande d'excitation, ledit circuit d'initialisation permettant de définir deux valeurs de référence de tension délivrées sélectivement à l'entrée de régulation du régulateur, par l'intermédiaire du circuit de commande d'excitation, un premier et un deuxième circuits de commande de sortie alternateur redressée permettant la commande des redresseurs commandés du premier, respectivement deuxième circuit à redresseurs commandés afin de permettre respectivement, l'alternateur étant en régime de surexcitation, la régulation de la tension délivrée par la première sortie alternateur redressée, par commande de l'angle de conduction des redresseurs commandés correspondants, à la valeur de la tension d'alimentation nominale et le découplage, par blocage des redresseurs commandés correspondants, de la première et de la deuxième sortie alternateur redressée, cette dernière délivrant à ladite charge auxiliaire la tension d'alimentation en régime de surexcitation.

Le dispositif d'alimentation objet de l'invention, trouve application, notamment à l'alimentation des circuits électriques de tout véhicule automobile ou analogue.

L'invention sera mieux comprise à la lecture de la description et à l'observation des dessins ci-après, dans lesquels :

– la figure 1 représente un schéma fonctionnel du dispositif d'alimentation électrique en surtension des circuits auxiliaires d'un véhicule automobile,
– la figure 2 représente un mode de réalisation détaillé, non limitatif, du dispositif représenté en figure 1.

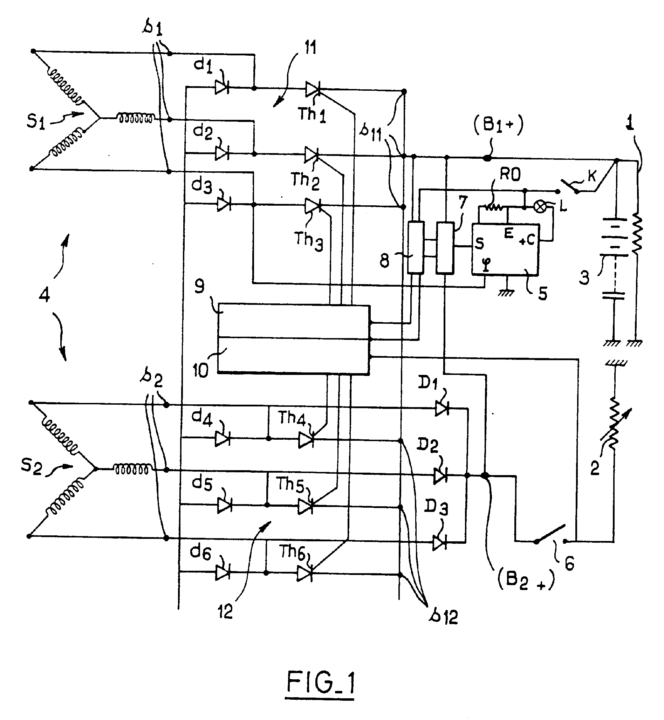

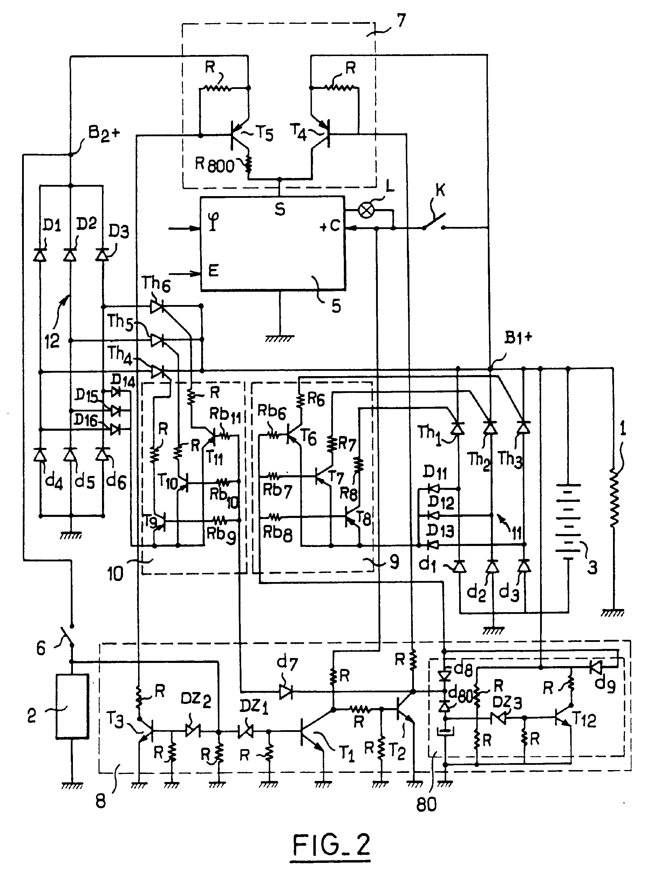

Dans les figures 1 et 2 précitées, les mêmes références représentent les mêmes éléments.

Le dispositif d'alimentation électrique en surtension des circuits auxiliaires d'un véhicule automobile objet de l'invention, sera tout d'abord décrit en liaison avec la figure 1.

Selon cette figure, le véhicule automobile est réputé comporter un circuit principal 1, comprenant une charge d'utilisation principale, notamment, cette charge d'utilisation principale étant alimentée par une batterie d'accumulateurs notée 3. La batterie d'accumulateurs notée 3 est chargée par un alternateur noté 4, dont le courant d'excitation est régulé par un régulateur 5. Le véhicule automobile comporte en outre des circuits auxiliaires notés 2, lesquels en fonctionnement doivent être soumis à une alimentation temporaire en régime de surtension . En outre, on rappelle que l'alternateur 4 est normalement entraîné par un moteur, non représenté au dessin.

Conformément au dispositif d'alimentation électrique en surtension objet de l'invention, celui-ci comprend en outre un alternateur 4 comportant deux enroulements stator notés S1 et S2 sur la figure 1. Chaque enroulement stator constitue une première s1, respectivement deuxième s2 sortie alternateur. On notera que contrairement au dispositif de l'art antérieur connu, l'alternateur à deux enroulements stator S1 et S2 est agencé de façon que les enroulements stator S1 et S2 pour une valeur d'excitation donnée de l'alternateur, délivrent une tension alternative de même valeur.

Ainsi qu'il apparaît en outre en figure 1, le dispositif objet de l'invention, comprend en outre un premier, noté 11, et un deuxième, noté 12, circuits à redresseurs commandés connectés à la première s1, respectivement deuxième s2, sortie alternateur. Le premier 11 et deuxième circuit à redresseurs commandés peuvent avantageusement être constitués par des circuits en pont, comportant dans une première branche, une diode de redressement par phase alternateur, diode notée respectivement d1, d2, d3, et d4, d5, d6. On notera également que l'autre branche des circuits redresseurs, respectivement premier 11 et deuxième 12 circuits à redresseurs commandés sont constitués par des redresseurs commandés notés respectivement Th1, Th2, Th3 et Th4, Th5, Th6.

Conformément à un objet du dispositif selon la présente invention, les sorties notées s11 et s12 des circuits à redresseurs commandés, premier circuit à redresseurs commandés 11 et deuxième circuit à redresseurs commandés 12, sont connectés en parallèle pour former une première sortie alternateur redressée notée B1+ sur la figure 1. La sortie alternateur redressée B1+ est connectée au circuit principal 1, et permet d'alimenter le circuit principal 1 sous tension nominale ainsi qu'il sera décrit ci-après dans la description. Par tension nominale, on entend bien entendu, à titre d'exemple non limitatif, dans le domaine des véhicules automobiles à usage privatif, une valeur continue redressée de l'ordre de 14 V.

Dans le dispositif objet de l'invention, le deuxième circuit redresseur 12 comporte en outre des éléments redresseurs notés D1, D2, D3, dont la sortie forme une deuxième sortie alternateur redressée notée B2+. Cette deuxième sortie alternateur redressée B2+ est connectée par l'intermédiaire d'un commutateur de commande au circuit auxiliaire 2. Sur la figure 1, le commutateur de commande est noté 6 et il permet, par mise en position de contact de ce commutateur, l'alimentation de la charge ou circuit auxiliaire 2, en régime de surtension, ainsi qu'il sera décrit ultérieurement dans la description.

On notera que de manière avantageuse, les redresseurs commandés Th1 , Th2, Th3, Th4, Th5, Th6, peuvent être constitués par des thyristors.

En outre, le dispositif d'alimentation électrique en surtension, objet de l'invention, tel que représenté en figure 1, comprend, également un régulateur noté 5, régulateur d'excitation alternateur, permettant l'excitation de l'alternateur 4, sous une intensité correspondant à un nombre d'ampères-tours, permettant de délivrer sur chaque sortie alternateur s1, s2, une tension dite d'alimentation nominale, ou une tension dite d'alimentation en régime de surexcitation. A titre d'exemple non limitatif, le régulateur d'excitation 5 peut avantageusement être constitué par un régulateur commercialisé sous la référence YV16 par la Société Motorola . De manière connue, ce régulateur comporte une entrée de régulation notée S, connectée à la première, respectivement deuxième sortie alternateur redressée B1+, B2+, par l'intermédiaire d'un circuit, noté 7, de commande d'excitation. Le régulateur d'excitation 5 comporte également une entrée de référence de phase notée $\psi$ reliée par exemple à la phase 3 de l'enroulement stator noté S1, une sortie E permettant d'imposer un courant d'excitation de valeur déterminée au bobinage rotor, noté de manière symbolique RO sur la figure 1, et une entrée +C correspondant à une entrée d'alimentation, par l'intermédiaire d'une lampe témoin L. Ainsi qu'indiqué sur la figure 1, la borne commune à la lampe témoin L et à la sortie excitation E est reliée à la borne de sortie alternateur redressée B1+, par l'intermédiaire de la clé de contact,notée K,du véhicule, ainsi que bien entendu à la batterie d'accumulateurs 3 et au circuit principal 1. Le fonctionnement général du régulateur d'excitation 5 est connu, il permet, à partir d'une valeur de tension de référence appliquée à l'entrée de régulation S, d'imposer une valeur de tension ou de courant d'excitation à l'enroulement rotor de l'alternateur.

Ainsi qu'il apparaît en outre en figure 1, le dispositif objet de l'invention comprend également un circuit d'initialisation noté 8, du circuit de commande d'excitation 7. Le circuit d'initialisation 8 permet de définir deux valeurs de référence de tension délivrées sélectivement à l'entrée de régulation S du régulateur 5 par l'intermédiaire du circuit 7 de commande d'excitation. Bien entendu, on comprendra que les deux valeurs de référence précitées permettent d'une part, soit l'excitation de l'alternateur 4 sous une intensité correspondant à un nombre d'amplères-tours permettant de délivrer la tension nominale de l'alternateur, soit au contraire, d'exciter celui-ci sous une intensité correspondant à un nombre d'ampères-tours permettant d'engendrer une tension d'alimentation en régime d'excitation, tension d'alimentation en surtension par rapport à la valeur nominale précitée. De préférence, et de façon non limitative, la tension d'alimentation en régime d'excitation peut être prise égale à une valeur permettant, après redressement, l'obtention d'une valeur de tension d'alimentation redressée délivrée par la borne B2+, de l'ordre de 42 volts.

Ainsi qu'on le remarquera en outre sur la figure 1, le dispositif d'alimentation électrique en surtension des circuits auxiliaires 2 d'un véhicule automobile selon l'invention, comprend également un premier-,noté 9,et un deuxième,noté 10,circuit de commande de sortie alternateur redressée.Les circuits précités permettent la commande des redresseurs commandés du premier 11, respectivement deuxième 12 circuits à redresseurs commandés, afin de permettre respectivement, l'alternateur 4 étant en régime de surexcitation, la régulation de la tension délivrée par la première sortie alternateur redressée B1+, par commande de l'angle de conduction des redresseurs commandés correspondants, à la valeur de la tension d'alimentation nominale, et, le découplage, par blocage des redresseurs commandés correspondants, de la première B1+ et de la deuxième B2+ sortie alternateur redressée.Cette dernière délivre à la charge auxiliaire 2, la tension d'alimentation en régime de surexcitation, le commutateur 6 de commande ayant été commuté en position fermée.

Le premier S1 et deuxième S2 enroulements stator de l'alternateur 4 ont le même nombre de spires. Le même nombre de spires des enroulements stator S1 et S2 permet, en fonctionnement normal, c'est-à-dire le commutateur de commande 6 étant en position ouverte, en l'absence d'alimentation de la charge auxiliaire, d'obtenir un fonctionnement de l'alternateur 4 à une puissance au moins égale à la puissance nominale de l'alternateur, les deux enroulements stator et les circuits redresseurs, premier circuit redresseur 11 et deuxième circuit redresseur 12, étant alors connectés en parallèle, le fonctionnement de l'ensemble étant alors sensiblement symétrique.

Les enroulements stators peuvent être conçus de façon à présenter une section cuivre dans un rapport inférieur à 1/2 en comparaison de la section cuivre des enroulements stator d'un alternateur classique, de façon à délivrer au circuit auxiliaire 2 un courant sous faible intensité. En effet, le courant délivré au circuit auxiliaire 2 peut être un courant sous plus faible intensité compte tenu du fait que l'alimentation en régime de surtension du circuit auxiliaire précité. A titre d'exemple non limitatif, l'enroulement stator S1 peut être constitué par des spires réalisées à l'aide d'un fil de cuivre de 110 centièmes de mm de diamètre, ainsi que l'enroulement stator S2 qui peut être réalisé à l'aide d'un fil de cuivre d'un diamètre de 110 centième de mm.

Une description plus détaillée des éléments essentiels précédemment décrits, en relation avec la figure 1, sera maintenant donnée en référence à la figure 2.

Sur la figure 2, on notera que l'ensemble des résistances notées R,en l'absence de tout indice, désignent des résistances de valeurs différentes permettant d'assurer une polarisation convenable des éléments à semi-conducteurs utilisés dans le mode de réalisation correspondant de cette figure. Bien entendu, les valeurs de ces résistances ne seront pas données car elles sont normalement connues de l'homme de métier en fonction du type de matériel utilisé et des notices d'utilisation correspondantes délivrées par les constructeurs de ces matériels.

Ainsi qu'il apparaît sur la figure 2 précitée, le circuit 7 de commande d'excitation peut comprendre avantageusement deux transistors notés T4, T5, dont l'électrode de collecteur est respectivement reliée directement et par l'intermédiaire d'une résistance notée R800 à la borne S d'entrée du régulateur 5. La borne d'émetteur des transistors T4 et T5 est connectée directement à la première, respectivement deuxième sortie alternateur redressé B1+, B2+. L'électrode de base des transistors T4 et T5 est reliée aux circuits d'initialisation 8 du circuit de commande d'excitation 7.

Le circuit d'initialisation 8 précité peut également, avantageusement,comprendre ainsi que représenté en figure 2, deux transitors en émetteur commun référencés T1 et T2 connectés en cascade. L'électrode de collecteur du transistor T1 est reliée à la borne de commutation de la clé de contact K, et les transistors T1 et T2 sont polarisés de façon qu'à l'initialisation, c'est-à-dire sur fermeture de la clé de contact K, lors du démarrage du véhicule automobile, le transistor T1 soit bloqué et le transistor T2 soit saturé. L'électrode de collecteur du transistor T2 est reliée à l'électrode de base du transistor T4. Le circuit d'initialisation 8 comprend en outre un transistor T3, monté en émetteur commun. L'électrode de base du transistor T3 est reliée par l'intermédiaire d'un circuit à conduction unidirectionnelle à l'électrode de base du transistor T1. Le circuit à conduction unidirectionnelle est constitué par deux diodes Zener notées DZ1 et DZ2 connectées en cascade, le point commun des éléments ou diodes Zener DZ1, DZ2 constituant le circuit à conduction unidirectionnelle étant via une résistance R relié à la borne de commutation du commutateur de commande 6. . L'électrode de collecteur du transistor T3 est reliée à l'électrode de base du transistor T5.

Le fonctionnement du circuit d'initialisation 8 et du circuit de commande d'excitation 7 est le suivant:

    – à l'initialisation, le commutateur de commande 6 étant ouvert, et la clé de contact K étant fermée, le transistor T3 est amené à l'état bloqué, les transistors T4 et T5 du circuit 7 de commande d'excitation étant respectivement saturés et bloqués. L'entrée de régulation S du régulateur 5 reçoit alors, par l'intermédiaire du transistor T4, la tension délivrée par la première sortie redressée B1+ pour une régulation de l'excitation à la valeur de tension d'alimentation nominale. La fermeture du commutateur de commande 6 opérée par l'opérateur du véhicule, a alors pour effet d'amener les transistors T1, T3 et T5 à saturation et les transistors T2 et T4 à l'état bloqué. L'entrée S du régulateur 5 reçoit alors par l'intermédiaire du transistor T5 la tension délivrée par la deuxième sortie B2+ pour une régulation de l'excitation de l'alternateur 4 à la valeur de tension d'alimentation en régime de surexcitation.

Afin d'assurer l'initialisation du système en régime d'alimentation normal, c'est-à-dire en l'absence de surtension et/ou en régime d'alimentation en régime de surtension, le circuit d'initialisation 8 comprend en outre un circuit de commande de l'angle de conduction des redresseurs commandés Th1, Th2, Th3 du premier circuit redresseur 11. Sur la figure 2, le circuit de commande de l'angle de conduction des redresseurs commandés est noté 80. Le circuit 80 de commande de l'angle de conduction des redresseurs commandés Th1, Th2, Th3 comprend, avantageusement, ainsi que représenté en figure 2, un transistor noté T12 et une diode d9, montés en cascade, le transistor T12 étant monté en émetteur commun. L'électrode de base du transistor T12 est reliée à un circuit de déclenchement à seuil à résistance capacité, relié par l'intermédiaire d'une diode d80 au collecteur du transistor T2, précédemment décrit. L'électrode de collecteur du transistor T12 est reliée à la cathode de la diode d9 et destinée à imposer un signal de commande donné au redresseur commandé Th1, Th2, Th3 par l'intermédiaire du premier circuit 9 de commande de sortie alternateur redressé sur blocage de la diode d80 lors du passage du transistor T2 de l'état saturé à l'état bloqué. Le blocage de la diode d80 a pour effet d'entraîner le blocage du transistor T12 lors de la commutation à la fermeture du commutateur de commande 6, lequel transistor T12 préalablement à la fermeture du commutateur de commande 6 précité, c'est-à-dire à l'état d'initialisation se trouvait polarisé à l'état saturé, la commutation du transistor T12 ayant pour effet d'amener la diode d9 à l'état de conduction. La commande des premier 9 et deuxième 10 circuits de commande de sortie alternateur redressée par l'intermédiaire du circuit d'initialisation 8 et en particulier par l'intermédiaire du circuit de commande 80 de l'angle de conduction des redresseurs commandés sera décrite en liaison avec le mode de réalisation respectif des premier 9 et deuxième 10 circuits de commande de sortie alternateur redressé tels que représentés en figure 2.

Selon la figure précitée, les premier 9 et deuxième 10 circuits de commande de sortie alternateur redressée comporte pour chaque redresseur commandé correspondant Th1, Th2, Th3 et Th4, Th5, Th6 du premier 11, respectivement deuxième 12 circuit redresseur un transistor de commutation noté T6, T7, T8, respectivement T9, T10, T11. Chaque transistor de commutation précité est monté par l'intermédiaire de diodes D11, D12, D13 respectivement D14, D15, D16 entre l'électrode de commande du thyristor correspondant et la sortie alternateur du premier 11, respectivement deuxième 12 circuit à redresseurs commandés. L'électrode de base de l'ensemble des transistors de commutation T6, T7, T8, et T9, T10, T11, est reliée à l'électrode de collecteur du transistor T1 par l'intermédiaire d'une résistance notée Rb6, Rb7, Rb8 et Rb9, Rb10, Rb11, et d'une diode d8, respectivement d7. L'électrode de collecteur des transistors de commutation T6, T7, T8 et T9, T10, T11 est connectée aux electrodes de commande du redresseur commandé correspondant Th1, Th2, Th3 et Th4, Th5, Th6. L'électrode de base de ces mêmes transistors de commutation T6, T7, T8 est en outre reliée par la diode d9 à l'électrode de collecteur du transistor T12.

Le fonctionnement des premier 9 et deuxième 10 circuits de commande de sortie alternateur redressée et du circuit d'initialisation 8 comportant le circuit de commande 80 de l'angle de conduction des redresseurs commandés Th1, Th2, Th3 est le suivant :

    – la fermeture du commutateur de commande 6 a pour effet, d'une part, sur saturation des transistors T3 et T5, pour commander le régime de surexcitation de l'alternateur ainsi que précédemment décrit, de provoquer la saturation du transistor T1 entraînant le blocage des transistors T9, T10, T11 et la déconnexion des premier 11 et deuxième 12 circuits redresseurs et des sorties alternateur redressée B1+, B2+, sur blocage des redresseurs commandés Th4, Th5, Th6 correspondants, et, d'autre part, sur blocage du transistor T2, provoquant le blocage de la diode d80, de provoquer la mise en conduction du transistor T12 pour imposer le courant de commande de l'électrode de commande des redresseurs commandés Th1, Th2, Th3, par l'intermédiaire du transistor de commutation T6, T7, T8 amené à l'état de saturation et de leur résistance de collecteur R6, R7, R8. Bien entendu, les résistances de base Rb6, Rb7, Rb8 et les résistances de collecteurs R6, R7, R8 des transistors de commutation T6, T7, T8 convenablement choisies permettent en définitive d'imposer l'angle de conduction des redresseurs commandés Th1, Th2, Th3 pour obtenir en sortie d'alternateur redressée B1+, une tension d'alimentation correspondant à la valeur de la tension d'alimentation nominale, bien que l'alternateur 4 soit en régime de surexcitation. Le circuit principal 1 est ainsi alimenté sous tension nominale, et le circuit auxiliaire 2 est alimenté sous une tension d'alimentation correspondant au régime de surexcitation de l'alternateur 4.

On comprendra ainsi que lors de la mise en route du véhicule, le régime du moteur au démarrage, correspondant à un régime de rotation à vitesse supérieure au régime de ralenti en raison notamment de la phase de démarrage du moteur, sous l'influence de système d'enrichissement du mélange air/essence, système dénommé "starter" sous la dénomination anglo-saxonne, le conducteur ou opérateur du véhicule est ainsi à même d'opérer une commande de l'excitation de l'alternateur par l'intermédiaire du régulateur 5, permettant d'obtenir une alimentation en surtension du circuit auxiliaire 2, sous intensité réduite et une alimentation du circuit principal 1 sous tension nominale, les deux alimentations étant concomitantes.

On comprendra également qu'en raison du fonctionnement de l'alternateur en régime de surexcitation, celui-ci délivre, au niveau du premier enroulement stator S1, une tension d'alimentation en surtension sous intensité réduite. En conséquence, une diminution des pertes Joule de l'alternateur est ainsi obtenue.

On a ainsi décrit un dispositif d'alimentation électrique des circuits auxiliaires d'une auto mobile en régime temporaire de surtension, particulièrement performant, le caractère performant apparaissant notamment du fait de la possiblité de commande entièrement automatique du dispositif d'alimentation objet de l'invention, ainsi que du fait des performances électriques de celui-ci. On notera en particulier que dans le cas d'une utilisation lors du démarrage du moteur du véhicule, notamment dans des conditions de température extérieure très basses, les circuits de dégivrage de la lunette arrière et du pare-brise, par exemple devant être suralimentés pendant un temps relativement bref, le dispositif d'alimentation tel que précédemment décrit permet pour un régime de fonctionnement du moteur en situation de commande de ce dernier par le starter, régime de fonctionnement correspondant sensiblement à un nombre de tours moteur de 1500 tours par minute, une alimentation en surtension. En régime de surtension, l'intensité d'alimentation peut alors être réduite à 80 % de la valeur nominale par exemple.

## Revendications

1. Dispositif d'alimentation électrique en suralimentation des circuits auxiliaires (2) d'un véhicule automobile, dont le circuit principal (1) comprend une charge d'utilisation principale alimentée par une batterie d'accumulateurs (3) chargée par un alternateur (4) dont le courant d'excitation est régulé par un régulateur (5), dispositif comprenant :
   – ledit alternateur (4) comportant deux enroulements stator (S1,S2) chaque enroulement stator constituant une première (s1) respectivement (s2) sortie alternateur,
   – un premier (11) et un deuxième (12) circuit à redresseurs commandés connectés à la première (s1) respectivement deuxième (s2) sortie alternateur, les sorties (s11,s12) desdits circuits à redresseurs commandés étant connectées en parallèle pour former une première sortie alternateur redressée (B1+) connectée audit circuit principal (1), ledit deuxième circuit redresseur (12) comportant en outre des éléments redresseurs (D1,D2,D3) dont la sortie forme une deuxième sortie alternateur redressée (B2+) connectée par l'intermédiaire d'un commutateur de commande aux circuits auxiliaires (2),
   – ledit régulateur (5) d'excitation alternateur permettant l'excitation dudit alternateur sous une intensité correspondant à un nombre d'ampères-tours permettant de déliver sur chaque sortie alternateur une tension d'alimentation nominale ou une tension d'alimentation en régime de surexcitation, ledit circuit régulateur comportant une entrée de régulation (S) connectée à la première respectivement deuxième sortie alternateur redressée (B1+), (B2+) par l'intermédiaire d'un circuit (7) de commande d'excitation,
   – un circuit d'initialisation (8) du circuit de commande d'excitation, ledit circuit d'initialisation permettant de définir deux valeurs de référence délivrées sélectivement à l'entrée de régulation (S) du régulateur (5) par l'intermédiaire du circuit (7) de commande d'excitation,

– un premier (9) et un deuxième (10) circuits de commande de sortie alternateur redressée permettant la commande des redresseurs commandés du premier (11) respectivement deuxième (12) circuit à redresseurs, l'alternateur (4) étant en régime de surexcitation, la régulation de la tension délivrée par la première sortie alternateur redressée (s11) à la valeur de la tension d'alimentation nominale et le découplage de la première (B1+) et de la deuxième (B2+) sortie alternateur redressée, cette dernière délivrant à ladite charge auxiliaire (2) la tension d'alimentation en régime de surexcitation.

2. Dispositif selon la revendication 1, caractérisé en ce que le premier (11) et le deuxième (12) circuits à redresseurs commandés sont constitués par des circuits en pont, les sorties des circuits à redresseurs commandés étant connectées en parallèle pour former ladite première sortie alternateur redressée (B1+).

3. Dispositif selon l'une des revendications 1 ou 2, caractérisé en ce que le premier (S1) et deuxième (S2) enroulements stator dudit alternateur (4) ont le même nombre de spires.

4. Dispositif selon l'une des revendications 1 à 3, caractérisé en ce que lesdits enroulements stator (S2) présentent une section cuivre dans un rapport inférieur à 1/2 en comparaison de la section de cuivre de l'enroulement stator d'un alternateur classique de façon à délivrer audit circuit auxiliaire (2) un courant sous faible intensité.

5. Dispositif selon l'une des revendications 1 à 4, caractérisé en ce que ledit circuit (7) de commande d'excitation comprend un premier (T4) et un deuxième (T5) transistors dont l'électrode de collecteur est respectivement reliée directement et par l'intermédiaire d'une résistance (R800) à la borne (S) d'entrée du régulateur (5), dont la borne d'émetteur est connectée directement à la première, respectivement deuxième sortie alternateur redressée (B1+), (B2+) et dont l'électrode de base est reliée au circuit d'initialisation (8) du circuit de commande d'excitation.

6. Dispositif selon la revendication 5, caractérisé en ce que ledit circuit d'initialisation (8) du circuit de commande d'excitation comprend :

– un troisième (T1) et un quatrième (T2) transistors à émetteur commun connectés en cascade, l'électrode de collecteur du troisième transistor (T1) étant reliée à la borne de commutation de la clé de contact (K), lesdits troisième et quatrième transistors (T1, T2) étant polarisés de façon que, à l'initialisation, sur fermeture de la clé de contact, le troisième transistor (T1) soit bloqué et que le quatrième transistor (T2) soit saturé, l'électrode de collecteur du quatrième transistor (T2) étant reliée à l'électrode de base du premier transistor (T4),

– un cinquième transistor (T3) monté en émetteur commun, dont l'électrode de base est reliée par l'intermédiaire d'un circuit à conduction unidirectionnelle (DZ1) (DZ2) à l'électrode de base du troisième transistor (T1) et dont l'électrode de collecteur est reliée à l'électrode de base du deuxième transistor (T5), le point commun des éléments (DZ1, DZ2) constituant le circuit à conduction unidirectionnelle étant directement relié à la borne de commutation du commutateur de commande (6), le cinquième transistor (T3), le commutateur de commande (6) étant ouvert étant à l'initialisation, c'est-à-dire lors de la fermeture de la clé de contact (K), amené à l'état bloqué, les premier et deuxième transistors (T4) (T5) dudit circuit (7) de commande d'excitation étant respectivement saturés et bloqués, l'entrée (S) du régulateur (5) recevant, par l'intermédiaire du premier transistor (T4) la tension délivrée par la première sortie redressée (B1+= pour une régulation de l'excitation à la valeur de tension d'alimentation nominale, la fermeture du commutateur de commande (6) ayant pour effet d'amener les quatrième et cinquième transistors (T2) (T3) et le deuxième transistor (T5) à saturation et les troisième, quatrième et premier transistors (T1), (T2), (T4) à l'état bloqué, l'entrée (S) du régulateur (5) recevant par l'intermédiaire du deuxième transistor (T5) la tension délivrée par la deuxième sortie redressée (B2+) pour une régulation de l'excitation à la valeur de tension d'alimentation en régime de surexcitation,

– un circuit de commande de l'angle de conduction des redresseurs commandés (Th1, Th2, Th3) du premier circuit redresseur (11) comprenant un sixième transistor (T12) et une première diode (d9) montés en cascade, le sixième transistor (T12) étant monté en émetteur commun, l'électrode de base du sixième transistor (T12) étant reliée à un circuit de déclenchement à seuil à résistance capacité, relié par l'intermédiaire d'une deuxième diode (d80), au collecteur du quatrième transistor (T2) et l'électrode de collecteur du sixième transistor (T12) étant reliée à la cathode de la deuxième diode, et destinée à imposer un signal de commande de donné aux redresseurs commandés (Th1) (Th2) (Th3) par l'intermédiaire du premier circuit (9) de commande de sortie alternateur redressée sur blocage de ladite deuxième diode (d80) lors du passage du quatrième transistor (T2) de l'état saturé à l'état bloqué.

7. Dispositif selon la revendication 6, caractérisé en ce que lesdits premier (9) et deuxième (10) circuits de commande de sortie alternateur redressée comportent pour chaque redresseur commandé correspondant (Th1, Th2, Th3) et (Th4, Th5, Th6) du premier (11) respectivement deuxième (12) circuits redresseurs, un premier transistor de commutation (T6, T7, T8) respectivement deuxième (T9, T10, T11), montés par l'intermédiaire de diodes (D11, D12, D13) respectivement (D14, D15, D16) entre l'électrode de commande du thyristor correspondant et la sortie alternateur du premier (11) respectivement deuxième (12) circuit à redresseurs commandés, l'électrode de base de l'ensemble des transistors de commutation (T6, T7, T8), et (T9, T10, T11) étant reliée à l'électrode de collecteur du troisième transistor (T1) par l'intermédiaire d'une résistance (Rb6, Rb7, Rb8 et Rb9, Rb10, Rb11) et d'une troisième diode (d8) respectivement (d7) et l'électrode du collecteur desdits transistors de commutation étant connectée aux électrodes de commande du redresseur commandé correspondant (Th1, Th2, Th3) et (Th4, Th5, Th6), l'électrode de base desdits premiers transistors de commutation (T6, T7, T8) étant en outre reliée par une première diode (d9) à l'électrode de collecteur du sixième transistor (T12), la fermeture du commutateur de commande (6) ayant pour effet, d'une part, sur saturation des cinquième et deuxième transistors (T3) et (T5) pour commander le régime de surexcitation de l'alternateur, de provoquer, la saturation du troisième transistor (T1) entraînant le blocage des deuxièmes transistors de commutation (T9, T10, T11) et la déconnexion des premier (11) et deuxième (12) circuits redresseurs et des sorties alternateurs redressées (B1+, B2+) sur blocage des redresseurs commande (Th4, Th5, Th6) correspondants, et, d'autre part, sur blocage du quatrième transistor (T2) provoquant le blocage de la deuxième diode (d80), de provoquer la mise en conduction du sixième transistor (T12) pour imposer le courant de commande de l'électrode de commande des redresseurs commandés (Th1, Th2, Th3) par l'intermédiaire des premiers transistors de commutation (T6, T7, T8) amenés à l'état de saturation et de leur résistance de collecteur (R6, R7, R8) et en définitive l'angle de conduction des redresseurs commandés pour obtenir en sortie d'alternateur redressée (B1+) une tension d'alimentation correspondant à la valeur de la tension d'alimentation nominale, bien que l'alternateur soit en régime de surexcitation, le circuit principal (1) étant ainsi alimenté sous tension nominale et le circuit auxiliaire (2) étant alimenté sous une tension d'alimentation correspondant au régime de surexcitation de l'alternateur (4).

8. Dispositif selon l'une des revendications précédentes, caractérisé en ce que les redresseurs commandés sont constitués par des thyristors.

**Patentansprüche**

1. Elektrische Stromversorgungsvorrichtung durch Überspannung für die Hilfsstromkreise (2) eines Kraftfahrzeugs, dessen Hauptstromkreis (1) eine Hauptnutzlast enthält, die durch eine Akkumulatorenbatterie (3) gespeist wird, welche von einem Wechselstromgenerator (4) geladen wird, dessen Erregerstrom durch einen Regler (5) geregelt wird, enthaltend:
   – den genannten Wechselstromgenerator (4) mit zwei Statorwicklungen (S1, S2), die jeweils einen ersten (s1) bzw. zweiten (s2) Generatorausgang bilden,
   – eine erste (11) und eine zweite (12) gesteuerte Gleichrichterschaltung, die jeweils an den ersten (s1) bzw. zweiten (s2) Generatorausgang angeschlossen sind, wobei die Ausgänge (s11, s12) der genannten gesteuerten Gleichrichterschaltungen parallel geschaltet sind, so daß ein erster gleichgerichteter Generatorausgang (B1+) entsteht, der an den genannten Hauptstromkreis (1) angeschlossen ist, wobei die genannte zweite Gleichrichterschaltung (12) außerdem Gleichrichterelemente (D1, D2, D3) enthält, deren Ausgang einen zweiten gleichgerichteten Generatorausgang (B2+) bildet, welcher über einen Steuerschalter an die Hilfsstromkreise (2) angeschlossen ist,
   – den genannten Generator-Erregerregler (5), der die Erregung des genannten Wechselstromgenerators mit einer Stromstärke ermöglicht, die einer Amperewindungszahl entspricht, welche es erlaubt, an jedem Generatorausgang eine Nennspeisespannung oder eine Speisespannung im Überspannungsbereich zu erzeugen, wobei der genannte Regelkreis einen Regeleingang (S) enthält, der an den ersten bzw. zweiten gleichgerichteten Generatorausgang (B1+), (B2+) über einen Erreger-Steuerkreis (7) angeschlossen ist,
   – eine Initialisierungsschaltung (8) des Erreger-Steuerkreises, wobei die genannte Initialisierungsschaltung die Definition von zwei Bezugswerten ermöglicht, die wahlweise am Regeleingang (S) des Reglers (5) über den Erreger-Steuerkreis (7) zugeführt werden,
   – einen ersten (9) und einen zweiten (10) Steuerkreis mit gleichgerichtetem Generatorausgang, der die Steuerung der von der ersten (11) bzw. zweiten (12) Gleichrichterschaltung gesteuerten Gleichrichter ermöglicht, wobei der Wechselstromgenerator (4) im Überspannungsbereich arbeitet, die Regelung der vom ersten gleichgerichteten Generatorausgang (s11) gelieferten Spannung auf den Wert der Nennspeisespannung und die Entkopplung des ersten (B1+) und des zweiten (B2+) gleichgerichteten Generatorausgangs, wobei letzterer die genannte Hilfslast (2) mit der Speisespannung durch Überspannung versorgt.

2. Vorrichtung nach Anspruch 1, **dadurch gekennzeichnet**, daß die erste (11) und die zweite (12) gesteuerte Gleichrichterschaltung aus Brückenschaltungen bestehen, wobei die Ausgänge der gesteuerten Gleichrichterschaltungen parallel geschaltet sind, so daß der genannte erste gleichgerichtete Generatorausgang (B1+) entsteht.

3. Vorrichtung nach einem der Ansprüche 1 oder 2, **dadurch gekennzeichnet**, daß die erste (S1) und zweite (S2) Statorwicklung des genannten Wechselstromgenerators (4) die gleiche Windungszahl aufweisen.

4. Vorrichtung nach einem der Ansprüche 1 bis 3, **dadurch gekennzeichnet**, daß die genannten Statorwicklungen (S2) einen Kupferquerschnitt in einem Verhältnis unter 1:2 im Vergleich zum Kupferquerschnitt der Statorwicklung eines herkömmlichen Wechselstromgenerators aufweisen, so daß die genannte Hilfsschaltung (2) einen Strom geringer Stärke erhält.

5. Vorrichtung nach einem der Ansprüche 1 bis 4, **dadurch gekennzeichnet**, daß die Erreger-Steuerschaltung (7) einen ersten (T4) und einen zweiten (T5) Transistor enthält, deren Kollektorelektrode jeweils direkt und über einen Widerstand (R800) mit der Eingangsklemme (S) des Reglers (5) verbunden ist, deren Emitterklemme direkt mit dem ersten bzw. zweiten gleichgerichteten Generatorausgang (B1+), (B2+) verbunden ist und deren Basiselektrode mit der Initialisierungsschaltung (8) der Erreger-Steuerschaltung verbunden ist.

6. Vorrichtung nach Anspruch 5, **dadurch gekennzeichnet**, daß die genannte Initialisierungsschaltung (8) der Erreger-Steuerschaltung folgendes einschließt:

– einen dritten (T1) und einen vierten (T2) Transistor mit gemeinsamem Emitter in Kaskadenschaltung, wobei die Kollektorelektrode des dritten Transistors (T1) mit der Schaltklemme des Kontaktschlüssels (K) verbunden ist, während der genannte dritte und vierte Transistor (T1, T2) so polarisiert sind, daß der dritte Transistor (T1) bei der Initialisierung, wenn der Kontaktschlüssel schließt, blockiert und der vierte Transistor (T2) gesättigt wird, wobei die Kollektorelektrode des vierten Transistors (T2) mit der Basiselektrode des ersten Transistors (T4) verbunden ist,

– einen fünften Transistor (T3), mit gemeinsamem Emitter geschaltet, dessen Basiselektrode über einen Einrichtungskreis (DZ1) (DZ2) mit der Basiselektrode des dritten Transistors (1) verbunden ist und dessen Kollektorelektrode mit der Basiselektrode des zweiten Transistors (T5) verbunden ist, während der gemeinsame Punkt der Elemente (DZ1, DZ2) den Einrichtungskreis bildet, der direkt mit der Umschaltklemme des Steuerschalters (6) verbunden ist, während der fünfte Transistor (T3), der Steuerschalter (6) bei Initialisierung offen ist, d.h. beim Schließen des Kontaktschlüssels (K), zur Herbeiführung des blockierten Zustands, wobei der erste und der zweite Transistor (T4) (T5) der genannten Erreger-Steuerschaltung (7) jeweils gesättigt und blockiert sind, während der Eingang (S) des Reglers (5) über den ersten Transistor (T4) die Spannung erhält, die vom ersten gleichgerichteten Ausgang (B1+) für eine Regelung der Erregung auf den Nenn-Speisespannungswert zugeführt wird, wobei das Schließen des Steuerschalters (6) bewirkt, daß der vierte und der fünfte Transistor (T2) (T3) sowie der zweite Transistor (T5) zur Sättigung gebracht und der dritte, der vierte und der fünfte Transistor (T1), (T2), T4) blockiert werden, während der Eingang (S) des Reglers (5) über den zweiten Transistor (T5) die Spannung erhält, die dem zweiten gleichgerichteten Ausgang (B2+) für eine Regelung der Erregung auf den Speisespannungswert im Überspannungsbereich zugeführt wird,

– eine Schaltung zur Steuerung des Leitungswinkels der gesteuerten Gleichrichter (Th1, Th2, Th3) der ersten Gleichrichterschaltung (11) mit einem sechsten Transistor (T12) und einer ersten Diode (d9), in Kaskade geschaltet, wobei der sechste Transistor (T12) auf einen gemeinsamen Emitter geschaltet ist, während die Basiselektrode des sechsten Transistors (T12) mit einem Schwellenwert-Auslösekreis mit kapazitivem Widerstand verbunden ist, der über eine zweite Diode (d80) an den Kollektor des vierten Transistors (T2) angeschlossen ist, und wobei die Kollektore1ektrode des sechsten Transistors (T12) mit der Kathode der zweiten Diode verbunden und dazu bestimmt ist, den gesteuerten Gleichrichtern (Th1) (Th2) (Th3) ein Datensteuersignal über die erste Steuerschaltung (9) für den gleichgerichteten Generatorausgang zuzuführen, bei Blockierung der genannten zweiten Diode (d80) beim Übergang des vierten Transistors (T2) vom gesättigten in den blockierten Zustand.

7. Vorrichtung nach Anspruch 6, **dadurch gekennzeichnet**, daß der genannte erste (9) und zweite (10) Steuerkreis für den gleichgerichteten Generatorausgang für jeden entsprechenden gesteuerten Gleichrichter (Th1, Th2, Th3) und (Th4, Th5, Th6) der ersten (11) bzw. zweiten (12) Gleichrichterschaltung einen ersten Umschalttransistor (T6, T7, T8) bzw. einen zweiten Umschalttransistor (T9, T10, T11) aufweisen, die mittels Dioden (D11, D12, D13) bzw. (D14, D15, D16) zwischen der Schaltelektrode des entsprechenden Thyristors und dem Generatorausgang der ersten (11) bzw. zweiten (12) gesteuerten Gleichrichterschaltung angeordnet sind, während die Basiselektrode der Schalttransistoreinheit (T6, T7, T8) und (T9, T10, T11) mit der Kollektorelektrode des dritten Transistors (T1) über einen Widerstand (Rb6, Rb7, Rb8 und Rb9, Rb10, Rb11) und eine dritte Diode (d8) bzw. (d7) verbunden ist und wobei die Kollektorelektrode der genannten Schalttransistoren mit den Steuerelektroden des entsprechenden gesteuerten Gleichrichters (Th1, Th2, Th3) und (Th4, Th5, Th6) verbunden ist, während die Basiselektrode der genannten ersten Schalttransistoren (T6, T7, T8) außerdem über eine erste Diode (d9) mit der Kollektorelektrode des sechsten Transistors (T12) verbunden ist, während das Schließen des Steuerschalters (6) einerseits bei Sättigung des fünften und sechsten Transistors (T3) und (T5) zur Steuerung des Generator-Übererregungsbereichs die Sättigung des dritten Transistors (T1) bewirkt, was zur Blockierung der zweiten Schalttransistoren (T9, T10, T11) und zur Abschaltung des ersten (11) und des zweiten (12) Gleichrichterkreises und der gleichgerichteten Generatorausgänge (B1+, B2+) bei Blockierung der entsprechenden Steuergleichrichter (Th4, Th5, Th6) führt, und andererseits bei Blockierung des vierten Transistors (T2), wodurch die Blockierung der zweiten Diode (d80) bewirkt wird, der sechste Transistor (T12) leitfähig gemacht wird, um den Steuerstrom der Steuerelektrode der gesteuerten Gleichrichter (Th1, Th2, Th3) über die ersten Schalttransistoren (T6, T7, T8) im Sättigungszustand und deren Kollektorwiderstand (R6, R7, R8) zuzuführen, und schließlich den Leitungswinkel der gesteuerten Gleichrichter, um am Ausgang des gleichgerichteten Generators (B1+) eine Speisespannung zu erzielen, die dem Wert der Nennspeisespannung entspricht, obgleich der Wechselstromgenerator im Übererregungsbereich arbeitet, wobei die Hauptschaltung (1) daher mit der Nennspannung und die Hilfsschaltung (2) mit einer Speisespannung versorgt wird, die dem Übererregungsbereich des Wechselstromgenerators (4) entspricht.

8. Vorrichtung nach einem der vorherigen Ansprüche, **dadurch gekennzeichnet** , daß die gesteuerten Gleichrichter aus Thyristoren bestehen.

## Claims

1. An electrical power supply apparatus for supplying with an overvoltage auxiliary circuits (2) of a motor vehicle, wherein the main circuit (1) comprises a main working load supplied from a battery (3) of accumulator cells charged by an alternator (4), the excitation current of which is regulated by a regulator (5), the apparatus comprising:
   – the said alternator (4), having two stator windings (S1, S2), with each stator winding constituting respectively a first (s1) and a second (s2) alternator output,
   – a first (11) and a second (12) controlled rectifying circuit connected respectively to the first (s1) and the second (s2) alternator output, with the outputs (s11, s12) of the said controlled rectifying circuits being connected in parallel so as to constitute a first rectified alternator output (B1+) connected to the said main circuit (1), the said second rectifying circuit (12) further including rectifier elements (D1, D2, D3), the output of which constitutes a second rectified alternator output (B2+) which is connected to the auxiliary circuits (2) through a control switching means,
   – the said alternator excitation regulator (5) being arranged to excite the said alternator to an intensity corresponding to a number of ampere-turns such as to enable a nominal supply voltage or a supply voltage in superexcitation mode to be delivered on each alternator output, the said regulating circuit having a regulation input (S) connected to the first and second rectified alternator outputs (B1+), (B2+), respectively, through an excitation control circuit (7),
   – a starter circuit (8) of the excitation control circuit, the said starter circuit for defining two reference values which are delivered selectively to the regulation input (S) of the regulator (5) through the excitation control circuit (7),
   – a first (9) and a second (10) rectified alternator output control circuit, for controlling the controlled rectifiers of the first and second rectifying circuits (11, 12) respectively when the alternator (4) is in its superexcitation mode, for regulating the voltage delivered through the first rectified alternator output (s11) at the nominal supply voltage value, and for decoupling the first rectified alternator output (B1+) and the second rectified alternator output (B2+), with the latter delivering the superexcitation supply voltage to the said auxiliary load (2).

2. Apparatus according to Claim 1, characterised in that the first (11) and the second (12) controlled rectifying circuits comprise bridge circuits, with the outputs of the controlled rectifying circuits being connected in parallel so as to constitute the said first rectified alternator output (B1+).

3. Apparatus according to Claim 1 or Claim 2, characterised in that the first stator winding (S1) and the second stator winding (S2) of the said alternator (4) have the same number of turns.

4. Apparatus according to one of Claims 1 to 3, characterised in that the said stator windings (S2) have a cross section of copper in a ratio of less than one half by comparison with the cross section of copper of the stator winding of a conventional alternator, whereby to deliver a low intensity current to the said auxiliary circuit (2).

5. Apparatus according to one of Claims 1 to 4, characterised in that the said excitation control circuit (7) includes a first transistor (T4) and a second transistor (T5), the collector electrodes of which are connected directly and through a resistor (R800), respectively, to the input terminal (S) of the regulator (5), with their emitter terminals being connected directly to the first and second rectified alternator outputs (B1+), (B2+) respectively, and their base electrodes being connected to the starter circuit (8) of the excitation control circuit.

6. Apparatus according to Claim 5, characterised in that the said starter circuit (8) of the excitation control circuit comprises:

– a third transistor (T1) and a fourth transistor (T2) connected in cascade with their emitters connected in common, the collector electrode of the third transistor (T1) being connected to the switching terminal of the contact key (K), the said third and fourth transistors (T1, T2) being polarised in such a way that, on starting, when the contact key is closed, the third transistor (T1) is blocked and the fourth transistor (T2) is saturated, the collector electrode of the fourth transistor (T2) being connected to the base electrode of the first transistor (T4),

– a fifth transistor (T3) in common emitter connection, with its base electrode connected through a unidirectionally conducting circuit (DZ1) (DZ2) to the base electrode of the third transistor (T1), and with its collector electrode being connected to the base electrode of the second transistor (T5), the common point of the elements (DZ1, DZ2) constituting the uni-directionally conducting circuit being directly connected to the switching terminal of the control switching means (6), the fifth transistor (T3) being put into the blocked state when the control switching means (6) is open at starting, that is to say during closing of the contact key (K), the first and second transistors (T4, T5) of the said excitation control circuit being saturated and blocked respectively, the input (S) of the regulator (5) receiving through the first transistor (T4) the voltage delivered by the first rectified output (B1+) for adjusting the excitation to the nominal supply voltage value, the effect of closing the control switching means (6) being to put the fourth and fifth transistors (T2, T3) and the second transistor (T5) into saturation and the third, fourth and first transistors (T1, T2, T4) into the blocked state, the input (S) of the regulator (5) receiving through the second transistor (T5) the voltage delivered by the second rectified output (B2+) for regulating the excitation to the superexcitation value of the supply voltage,

– a control circuit for the conduction angle of the controlled rectifiers (Th1, Th2, Th3) of the first rectifying circuit (11), comprising a sixth transistor (T12) and a first diode (d9) mounted in cascade, the sixth transistor (T12) having its emitter connected in common, the base electrode of the sixth transistor (T12) being connected to a resistive-capacitive, threshold-based, starting circuit which is connected through a second diode (d80) to the collector of the fourth transistor (T2), and the collector electrode of the sixth transistor (T12) being connected to the cathode of the second diode whereby to impose a predetermined control signal on the controlled rectifiers (Th1, Th2, Th3) through the first rectified alternator output control circuit (9), for blocking the said second diode (d80) during transition of the fourth transistor (T2) from the saturated state to the blocked state.

7. Apparatus according to Claim 6, characterised in that the said first (9) and second (10) rectified alternator output control circuits include, for each corresponding controlled rectifier (Th1, Th2, Th3; and Th4, Th5, Th6) of the first rectifying circuit (11) and the second rectifying circuit (12) respectively, a first switching transistor (T6, T7, T8) and a second switching transistor (T9, T10, T11) respectively, connected through diodes (D11, D12, D13 and D14, D15, D16 respectively) between the control electrode of the corresponding thyristor and the alternator output of the first controlled rectifier circuit (11) and the second controlled rectifier circuit (12) respectively, the base electrodes of all the switching transistors (T6, T7, T8; and T9, T10, T11) being connected to the collector electrode of the third transistor (T1) through a resistor (Rb6, Rb7, Rb8; and Rb9, Rb10, Rb11) and a third diode (d8 and d7 respectively), and the collector electrode of the said switching transistors being connected to the control electrodes of the corresponding controlled rectifier (Th1, Th2, Th3; and Th4, Th5, Th6), the base electrode of the said first switching transistors (T6, T7, T8) being also connected through a first diode (d9) to the collector electrode of the sixth transistor (T12), the effect of the closing of the control switching means (6) being firstly, on saturation of the fifth and twelfth transistors (T3 and T5) so as to control the superexcitation mode of the alternator, to cause saturation of the third transistor (T1) so as to put the second switching transistors (T9, T10, T11) in the blocked state, together with disconnection of the first rectifying circuit (11) and the second rectifying circuit (12) and of the rectified alternator outputs (B1+, B2+) so as to block the corresponding control rectifiers (Th4, Th5, Th6), and secondly, on blocking of the fourth transistor (T2) causing the second diode (d80) to be blocked, that of causing the sixth transistor (T12) to become conducting, so as to impose the control current from the control electrodes of the controlled rectifiers (Th1, Th2, Th3) through first switching transistors (T6, T7, T8), these having been brought to saturation, and through their collector resistors (R6, R7, R8), and, in short, the conduction angle of the controlled rectifiers, whereby to obtain at the rectified alternator output (B1+) a supply voltage which corresponds to the value of the nominal supply voltage even when the alternator is in a state of superexcitation, the main circuit (1) being thus supplied at nominal voltage and the auxiliary circuit (2) being supplied at a voltage corresponding to the superexcitation mode of the alternator (4).

8. Apparatus according to one of the preceding Claims, characterised in that the controlled rectifiers comprise thyristors.

FIG_1

FIG_2